# EUROPÄISCHE PATENTSCHRIFT

(11) **EP 0 495 025 B1**
(45) Veröffentlichungstag und Bekanntmachung des Hinweises auf die Patenterteilung: **14.08.1996**
(21) Anmeldenummer: 91911360.5
(22) Anmeldetag: 26.06.1991
(51) Int. Cl.: B65G 15/08

(54) **FÖRDERGURT FÜR SCHLAUCHBAND-FÖRDERANLAGEN**
CONVEYOR BELT FOR CLOSED BELT CONVEYORS
BANDE TRANSPORTEUSE POUR CONVOYEUR A BANDE FORMANT GAINE

(30) Priorität: 01.08.1990 DE 4024359
(43) Veröffentlichungstag der Anmeldung: 22.07.1992
(73) Patentinhaber: Continental Aktiengesellschaft, D-30165 Hannover (DE)
(72) Erfinder: SIMONSEN, Harald, D-3257 Springe 5 (DE); RICKERT, Klaus, D-3410 Northeim (DE)
(86) Internationale Anmeldenummer: DE9100521
(87) Internationale Veröffentlichungsnummer: WO9202439

(56) Entgegenhaltungen:
- EP-A- 50 962
- WO-A-89/05765
- GB-A- 2 152 000

## Beschreibung

Die Erfindung betrifft einen Fördergurt für Schlauchband-Förderanlagen, der aus Gummi oder gummiähnlichem Kunststoff und hierin eingebetteten textilen und/oder metallischen Verstärkungseinlagen aufgebaut ist, der in der Schlauchband-Förderanlage unter Bildung eines Schlauches geführt wird, und der in Querrichtung fünf Zonen aufweist.

Aus der DE-A-3741537 ist eine Schlauchband-Förderanlage bekannt, in der der schlauchförmig geschlossene Fördergurt einen durch entsprechende Anordnung der Trag- und Führungsrollen ovalen Querschnitt aufweist. Durch das Führen des geschlossenen Fördergurtes in Form eines ovalen Querschnitts sollen ungewollte Verdrehungen vermieden werden, die bei Kurvenverläufen der Anlage auftreten können. Bei einer kontrollierten Führung des durch Aufeinanderliegen der Randzonen geschlossenen Fördergurtes können die Führungsrollen so eingestellt werden, daß der Überlappungsbereich der Randzonen des Fördergurtes immer von einer der Führungsrollen abgedeckt wird.

Die vorteilhafte ovale Führung des Fördergurtes soll den Zweck der besseren Gurtführung sowie der Vermeidung des ungewollten Verdrehens auf der Förderstrecke dienen. Der ovale Querschnitt des geschlossenen Fördergurtes wird durch konstruktive Anordnung der Trag- bzw. Führungsrollen erzielt. Durch entsprechende Anordnungen der Trag- und Führungsrollen kann jede Form der Ovalität bis hin zur klassischen Ellipse erreicht werden. Der sich zu einem Schlauch schließende Fördergurt wird durch die konstruktive Ausbildung der die Trag- und Führungsrollen aufnehmenden Führungsvorrichtungen zwangsläufig nach seinem Zusammenfalten in die ovale Querschnittsform gezwängt. Eine ungewollte Verdrehung des Fördergurtes läßt sich aber nicht vollständig verhindern.

Aus der WO 89/05765 ist der die Gattung bildende Schlauchfördergurt bekannt, der im Querschnitt ein Rechteck mit gerundeten Ecken ist. Die steifen, geraden Ober- und Unterseiten sind quersteif, weil querliegende Fäden aus Metall oder Kunststoff als Verstärkungslagen eingebettet sind. Eine mittlere Verstärkungslage weist in Längsrichtung des Fördergurtes verlaufende Fasern oder Fäden aus Stahl oder Kunststoff auf.

Der Erfingung liegt die Aufgabe zugrunde, einen Fördergurt für Schlauchband-Förderanlagen zu schaffen, der im geschlossenen Zustand einen ovalen Gurtquerschnitt einnimmt und der eine lange Lebensdauer aufweist.

Die Aufgabe wird erfindungsgemäß durch die im Anspruch 1 genannten Merkmale gelöst.

Die steife Mittelzone des Fördergurtes ist von angrenzenden Seitenzonen umgeben, die eine kleinere Querbiegesteifigkeit aufweisen. Diese Seitenzonen bilden im schlauchförmig geschlossenen Zustand des Fördergurtes biegewillige Seitenbereiche und begünstigen dadurch die Einnahme eines ovalen Gurtquerschnittes, weil die an die Seitenzonen anschließenden Randzonen einen Überlappungsbereich bilden, der durch die reibschlüssige Verbindung der Gurtrandzonen wieder querbiegesteifer ist. Die biegeweichen Seitenzonen ermöglichen das Einstellen kleiner Biegeradien quer zur Förderrichtung, so daß sich der ovale oder ellipsenförmige Gurtquerschnitt ohne großen Widerstand einstellen kann.

Die sich gegenüberliegende Mittelzone und Überlappungszone sind durch die beiden biegeweichen Seitenzonen miteinander verbunden. Diese Zonenanordnung ermöglicht eine aktive Führung des geschlossenen Fördergurtes, da der Fördergurt durch seinen Aufbau willig den ovalen Gurtquerschnitt einnimmt. Die durch die Anordnung der Transport- und Führungsrollen vorbestimmte Position des Ovals wird von dem geschlossenen Fördergurt ohne Verdrehen eingenommen, da er durch seinen Aufbau am Umfang einen unterschiedlichen Widerstand ausweist und daher von selbst in die von den Transport- und Führungsrollen angebotene Lage des Ovals dringt. Es ist somit eine aktive Führung des Fördergurtes in gewollte Positionen möglich.

In vorteilhafter Ausbildung der Erfindung beträgt die Querbiegesteifigkeit der beiden Seitenzonen 45 bis 70% und die Querbiegesteifigkeit der Randzonen 60 bis 80% der Querbiegesteifigkeit der Mittelzone. Die symmetrisch zur Mittelzone angeordneten Randzonen und Seitenzonen sind durch Wahl der Querbiegesteifigkeiten in den genannten Bereichen günstig zur Erzielung des ovalen Gurtquerschnitts eingestellt.

In weiterer vorteilhafter Ausgestaltung der Erfindung beträgt die Querbiegesteifikeit der Seitenzonen ca. 55% und die Querbiegesteifigkeit der Randzonen ca. 65% der Querbiegesteifigkeit der Mittelzone. Diese Auswahl der Querbiegesteifigkeiten hat sich bewährt, da dadurch die üblichen Einsatzfälle von Schlauchband- Förderanlagen abgedeckt sind.

Das Gurtverhalten bezüglich Einnahme eines ovalen Querschnitts wird durch die im Anspruch 4 und 5 genannten Längenbereiche der einzelnen Gurtquerzonen begünstigt. Der Schlauchfördergurt weist in der Mittelzone eine Gewebelage auf, über der eine weitere Gewebelage angeordnet ist, die sich bis in die beiden Randzonen erstreckt. Die Realisierung der unterschiedlich biegesteifen Zonen wird auf einfache Weise erzielbar. Die Randzonen können zusätzlich verstärkt sein.

Über die Breite der Randzonen sind verteilt die Zugkräfte übertragenden Drahtseile angeordnet. In dem Bereich, wo sich die Drahtseile und die in die Randzone hineinragende Gewebelage überdecken, wird auf diese einfache Weise eine Erhöhung der Querbiegesteififkeit gegenüber der Seitenzone erzielt. Eine andere zusätzliche Verstärkung der Randzonen kann dadurch entfallen.

Um die freien Ränder der Randzonen weicher auszubilden, damit sie sich an den übrigen Gurtkörper gut anlegen, ragt die obere Gewebelage nur zum Teil in den Randzonenbereich hinein.

Durch die Erfindung wird ein Fördergurt für eine Schlauchband-Förderanlage geschaffen, der sich aufgrund seines Aufbaus bereitwillig schlauchförmig unter Einnahme eines ovalen Querschnitts schließen läßt. Die für einen ovalen Querschnitt ausgebildeten mechanischen Führungseinrichtungen dienen jetzt nur noch noch zum Führen und Halten des ovalen Gurtquerschnittes und nicht mehr zum Zwängen des Fördergurtes in den ovalen Querschnitt.

Die vorteilhafte Folge liegt in einer Erhöhung der Lebensdauer des Fördergurtes und in seiner wesentlich besseren Führungsmöglichkeit über die gesamte Förderstrecke. Durch die erfindungsgemäße Ausbildung wird eine Verstärkung der Führungskräfte erreicht. Infolge der ungleichmäßigen Querbiegesteifigkeit des Fördergurtes nimmt dieser bevorzugt die ovale Form ein, die ein gutes Führen des geschlossenen Fördergurtes ohne ungewollte Verdrehungen des Fördergurtes bewirkt.

Anhand der Zeichnung wird nachstehend ein Ausführungsbeispiel der Erfindung näher erläutert. Es zeigt
- Fig. 1: im Querschnitt das in einem portalartigen Rahmen mit feststehenden Trag- und Führungsrollen geführte Obertrum eines schlauchförmig geschlossenen Fördergurtes, der einen ovalen Gurtquerschnitt aufweist;
- Fig. 2: einen Querschnitt durch den flach gelegten Fördergurt.

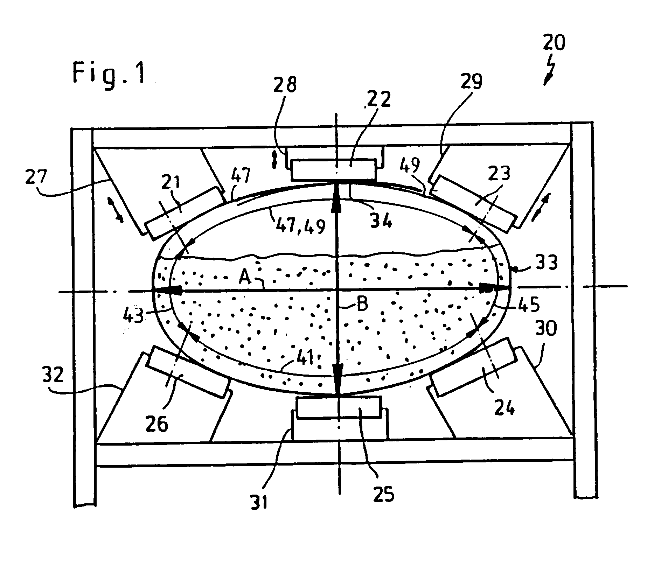

Die in Fig. 1 gezeigte Schlauchband-Förderanlage 20 weist feststehende Trag- und Führungsrollen 21, 22, 23, 24, 25, 26 auf, die in entsprechenden Halterungen 27, 28, 29, 30, 31, 32 gehalten sind. Zum Zwecke der Einstellung sind die Trag- und Führungsrollen 21 bis 26 innerhalb der Halterungen radial in Richtung des Fördergurtes 33 verstellbar. Durch Verstellen einzelner oder aller Trag- und Führungsrollen 21 bis 26 kann jede Ovalität und jede Position des Fördergurtes 33 erzielt werden. Der Fördergurt 33 ist schlauchförmig unter Bildung eines ovalen Querschnittes geschlossen, wobei sein Uberlappungsbereich 34 von einer Führungsrolle 22 abgedeckt wird.

Die Ovalität des Fördergurtes 33 wird durch seine horizontale Hauptachse A und durch seine Nebenachse B bestimmt. Die Schüttung des eingeschlossenen, zu transportierenden Materials füllt den Gurtquerschnitt zu etwa 3/4 aus.

Auf den Gurtquerschnitt bezogen weist der Fördergurt 33 eine untere, biegesteife Mittelzone 41 auf. Die sich daran beidseitig anschließenden seitlichen Bereiche 43, 45 des ovalen Fördergurtschlauches 33 verlaufen unter kleineren Biegeradien und gehen in den jeweiligen Randzonenbereich 47 bzw. 49 über, die wieder mit größeren Biegeradien verlaufen. Die Randzonen 47 und 49 des Fördergurtes 33 liegen im Uberlappungsbereich 34 des schlauchförmig geschlossenen Fördergurtes 33 übereinander.

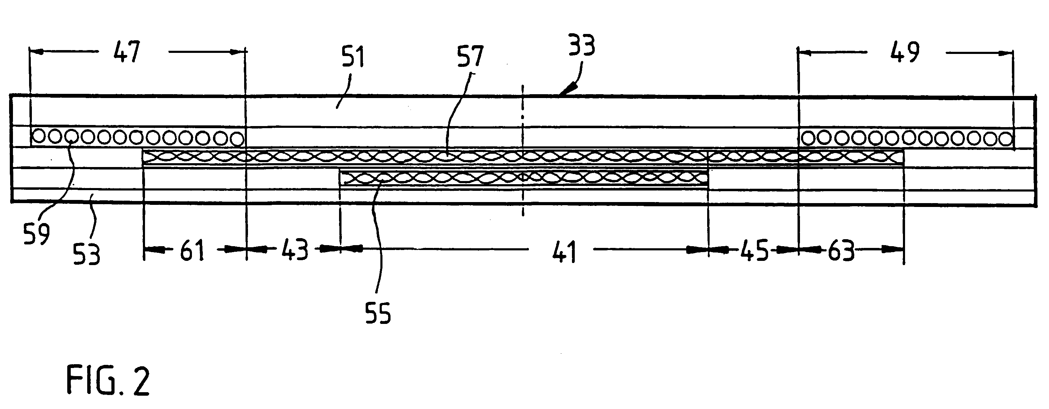

In Fig. 2 wird der flachgelegte Fördergurt 33 im Querschnitt dargestellt. In die aus Gummischichten aufgebaute Elastomermatrix des Fördergurtes 33, die oben und unten von Gummiabdeckplatten 51 und 53 begrenzt ist, ist mittig eine Gewebelage 55 eingebettet, durch die die Mittelzone 41 gebildet wird. Uber dieser Gewebelage 55 ist unter Zwischenlage üblicher Skimschichten aus Haftgummi eine weitere Gewebelage 57 vorhanden, die sich über eine größere Breite erstreckt. In den beiden Randzonen 47 und 49 sind mehrere parallel nebeneinanderliegende Drahtseile 59 längsverlaufend eingebettet, um die Zugkräfte zu übertragen. Die Gewebelage 57 endet in etwa zur Hälfte der jeweiligen Drahtseillage 59.

Durch diesen Aufbau werden über den Gurtquerschnitt gesehen verschiedene Zonen unterschiedlicher Querbiegesteifigkeit geschaffen. An die Mittelzone 41 schließen sich jeweils eine kurze Seitenzone 43 und 45 an, in der lediglich die zweite Gewebelage 57 als Verstärkungseinlage vorliegt. An die beiden Seitenzonen 43 und 45 schließen sich die Randzonen 47 und 49 an, die wiederum jeweils in zwei verschiedene Bereiche aufgeteilt sind. In den inneren, den Seitenzonen 43, 45 zugewandten Bereichen 61, 63 liegen Gewebelage 57 und Drahtseillage 59 übereinander und bilden so einen Bereich mit einer größeren Querbiegesteifigkeit als die Querbiegesteifigkeit in den Seitenzonen 43 und 45. Der äußere Bereich der Randzonen 47 und 49 weist nur die Drahtseillage 59 auf, so daß hier die Querbiegesteifigkeit wieder geringer ist.

## Patentansprüche

1. Fördergurt für Schlauchband-Förderanlagen, der aus Gummi oder gummiähnlichem Kunststoff und hierin eingebetteten textilen und/oder metallischen Verstärkungseinlagen aufgebaut ist, der in der Schlauchband-Förderanlage unter Bildung eines Schlauches geführt wird, und der in Querrichtung fünf Zonen (41; 43; 45; 47; 49) aufweist, und zwar
1) eine Mittelzone (41), in der eine erste Verstärkungseinlage (55) vorhanden ist, über der eine zweite, sich bis in zwei Randzonen (47, 49) erstreckende Verstärkungseinlage (57) angeordnet ist, und die von zwei Seitenzonen (43, 45) symmetrisch umgeben ist, deren Querbiegesteifigkeit kleiner ist als die Querbiegesteifigkeit der Mittelzone (41),
2) die beiden Randzonen (47, 49), die im geschlossenen Betriebszustand einen gemeinsamen Überlappungsbereich bilden, der eine größere Querbiegesteifigkeit aufweist als die Querbiegesteifigkeit der Seitenzonen (43, 45)
3) und mindestens eine der Zonen (41; 43; 45; 47; 49) mit Drahtseilen als Verstärkungen,
**dadurch gekennzeichnet,**
daß die ersten und zweiten Verstärkungseinlagen Gewebelagen (55, 57) sind und daß in den beiden Randzonen (47, 49) über ihre Breite verteilt die in Längsrichtung durchlaufenden Drahtseile (59) angeordnet sind, deren Anzahl je Zone in Querrichtung zum Teil von der zweiten Gewebelage (57) überdeckt wird.

2. Fördergurt nach Anspruch 1, dadurch gekennzeichnet, daß die Querbiegesteifigkeit jeder der beiden Seitenzonen 45 bis 70% und die Querbiegesteifigkeit jeder der beiden Randzonen 60 bis 80% der Querbiegesteifigkeit der Mittelzone (41) betragen.

3. Fördergurt nach Anspruch 2, dadurch gekennzeichnet, daß die Querbiegesteifigkeit der Seitenzonen 55% und die Querbiegesteifigkeit jeder der beiden Randzonen 65% der Querbiegesteifigkeit der Mittelzone (41) betragen.

4. Fördergurt nach einem der Ansprüche 1 bis 3, dadurch gekennzeichnet, daß die Mittelzone 20 bis 40%, die Summe der beiden Seitenzonen 15 bis 25% und die Summe der Randzonen 40 bis 60% der Gesamtbreite des Fördergurtes betragen.

5. Fördergurt nach Anspruch 4, dadurch gekennzeichnet, daß die Querschnittslänge der Mittelzone 30% , die Summe der beiden Seitenzonen 20% und die Summe der beiden Randzonen 50% der gesamten Gurtbreite betragen.

## Claims

1. Conveyor belt for closed belt conveyor systems, which belt is constructed from rubber or rubber-like plastics material and textile and/or metallic reinforcing members embedded therein, and which belt is guided in the closed belt conveyor system so as to form a tube, and which belt has, when viewed with respect to the transverse direction, five zones (41; 43; 45; 47; 49), namely
1) a central zone (41), in which there is provided a first reinforcing member (55), above which is disposed a second reinforcing member (57), which extends to two edge zones (47, 49), and which central zone is symmetrically surrounded by two lateral zones (43, 45), the resistance to transverse bending of said lateral zones being lower than the resistance to transverse bending of the central zone (41),
2) the two edge zones (47, 49), which form a joint overlapping region in the closed operational state, which region has a greater resistance to transverse bending than the resistance to transverse bending of the lateral zones (43, 45),
3) and at least one of the zones (41; 43; 45; 47; 49) having wire cables as reinforcements,
characterised in that the first and second reinforcing members are fabric plies (55, 57), and in that the wire cables (59), which extend in the longitudinal direction, are disposed in the two edge zones (47, 49) so as to be distributed over their width, the number of said cables per zone being partially covered by the second fabric ply (57) when viewed with respect to the transverse direction.

2. Conveyor belt according to claim 1, characterised in that the resistance to transverse bending of each of the two lateral zones is between 45 % and 70 %, and the resistance to transverse bending of each of the two edge zones is between 60 % and 80 %, of the resistance to transverse bending of the central zone (41).

3. Conveyor belt according to claim 2, characterised in that the resistance to transverse bending of the lateral zones is 55 %, and the resistance to transverse bending of each of the two edge zones is 65 %, of the resistance to transverse bending of the central zone (41).

4. Conveyor belt according to one of claims 1 to 3, characterised in that the central zone is between 20 % and 40 %, the sum of the two lateral zones is between 15 % and 25 %, and the sum of the edge zones is between 40 % and 60 %, of the total width of the conveyor belt.

5. Conveyor belt according to claim 4, characterised in that the cross-sectional length of the central zone is 30 %, and the sum of the two lateral zones is 20 %, and the sum of the two edge zones is 50 %, of the total belt width.

## Revendications

1. Bande transporteuse pour des convoyeurs à bande formant gaine, qui est constituée de caoutchouc ou d'une matière analogue au caoutchouc et dans laquelle sont noyés des inserts de renforcement textiles et/ou métalliques, cette bande étant guidée dans le convoyeur en formant un tuyau souple ou gaine et présentant en direction transversale cinq zones (41 ; 43 ; 45 ; 47 ; 49), notamment :
1) une zone centrale (41), dans laquelle il est prévu un premier insert de renforcement ( 55) au-dessus duquel est disposé un second insert de renforcement (57), s'étendant jusque dans deux zones de bordure (47, 49) et qui est bordée symétriquement par deux zones latérales (43, 45), dont la résistance à la flexion transversale est plus petite que la résistance à la flexion transversale de la zone centrale ( 41),
2) les deux zones de bordure (47, 49), qui forment dans l'état fermé de service une région commune de recouvrement qui a une plus grande résistance à la flexion transversale que la résistance à la flexion trans-versale des zones latérales (43, 45),
3) et au moins une des zones (41; 43 ; 45 ; 47 ; 49) comportant des câbles servant d'inserts de renforcement,
- caractérisée en ce que :
- le premier et le second inserts de renforcement sont constitués par des couches de tissus (55, 57) et il est prévu dans les deux zones de bordure (47, 49), des câbles (59) répartis sur leurs largeurs, ces câbles (59), étant orientés dans la direction longitudinale et leur nombre dans chaque zone étant recouvert transversalement et en partie par la seconde couche de tissu ( 57).

2. Bande transporteuse selon la revendication 1, caractérisée en ce que la résistance à la flexion transversale de chacune des deux zones latérales est comprise entre 45 et 70 % de la résistance à la flexion transversale de la zone centrale (41) et en ce que la résistance à la flexion transversale de chacune des deux zones de bordure, est comprise entre 60 et 80 % de la résistance à la flexion transversale de la zone centrale (41).

3. Bande transporteuse selon la revendication 2, caractérisée en ce que la résistance à la flexion transversale des zones latérales s'élève à 55 %, et celle de chacune des deux zones de bordure à 65 % de la résistance à la flexion transversale de la zone centrale (41).

4. Bande transporteuse selon une des revendications 1 à 3, caractérisée en ce que la zone centrale couvre 20 à 40 %, la somme des deux zones latérales 15 à 25 %, et la somme des zones de bordure 40 à 60 % de la largeur totale de la bande transporteuse.

5. Bande transporteuse selon la revendication 4, caractérisée en ce que la longueur de section de la zone centrale s'élève à 30 % de la largeur totale de la bande transporteuse! celle de la somme des deux zones latérales à 20 %, et celle de la somme des deux zones de bordure à 50 %.
